# EUROPÄISCHE PATENTSCHRIFT

(11) **EP 2 172 749 B1**
(45) Veröffentlichungstag und Bekanntmachung des Hinweises auf die Patenterteilung: **01.07.2015**
(21) Anmeldenummer: 08017287.7
(22) Anmeldetag: 01.10.2008
(51) Int. Cl.: G01F 23/284, H01Q 13/06

(54) **Mikrowellenantenne für ein Füllstandmessgerät**
Microwave antenna for a fill level measuring device
Appareil de mesure du niveau de remplissage

(43) Veröffentlichungstag der Anmeldung: 07.04.2010
(73) Patentinhaber: VEGA Grieshaber KG, 77709 Wolfach (DE)
(72) Erfinder: Dietmeier, Jürgen, 77756 Hausach (DE)
(74) Vertreter: Westphal, Mussgnug & Partner Patentanwälte mbB

(56) Entgegenhaltungen:
- EP-A- 0 616 385
- WO-A-02/41446
- WO-A-03/046491
- WO-A-03/078936
- DE-A1-102005 022 493
- DE-A1-102005 056 042
- DE-U1- 29 709 926
- JP-A- 2002 009 542
- HABENAUER, BODENSTEIN: "Maschinenelemente" 2008, SPRINGER , XP008104028 * Absatz [2.5.4]; Abbildung 2.74 *

## Beschreibung

Mit Füllstandsmessgeräten wird der Füllstand von Flüssigkeiten und Schüttgütern in einem Behälter erfasst. Dabei wird zwischen der kontinuierlichen Messung mittels Füllstandsensoren und Grenzstandsensoren unterschieden. Die Auswahl des geeigneten Messverfahrens hängt davon ab, ob es sich um Gase, Flüssigkeiten oder Schüttgüter handelt sowie von den Rahmenbedingungen, also bspw. vom Druck und der Temperatur in den Behältern.

So wird für die Füllstandmessung neben anderen Technologien insbesondere Radar eingesetzt, dessen Mikrowellen in einem Hochfrequenzmodul erzeugt und bspw. über einen Erregerstift in einen Wellenleiter eingespeist werden, der an eine Mikrowellenantenne, insbesondere an eine Hornantenne angekoppelt ist. Über die strahlende Öffnung (Apertur) dieser Mikrowellenantenne wird elektromagnetische Energie in Form der Mikrowellen abgestrahlt bzw. zur Bestimmung der Laufzeit eines gesendeten und am Füllgut reflektierten Radarimpulses empfangen, um hieraus den Füllstand zu bestimmen.

Solche Mikrowellenantennen werden je nach Anwendungszweck aus unterschiedlichen Werkstoffen hergestellt und müssen auch in chemisch aggressiven Umgebungsbedingungen einsetzbar sein und gleichzeitig muss das Eindringen von Kondensat oder anderen Verunreinigungen in den Antennenhohlraum verhindert werden.

So wird in der DE 100 57 441 A1 eine Hornantenne für ein Radar-Füllstandmessgerät vorgeschlagen, bei dem der Antennenhohlraum mit dielektrischem Material ausgefüllt ist, so dass dabei die strahlende Öffnung der Hornantenne verschlossen wird. Dieser Prozess des Vergießens und Aushärtens des dielektrischen Materials ist aufwendig und führt zu langen Herstellzeiten.

Desweiteren ist aus der der EP 1 448 959 B1 ein Antennensystem mit einer Hornantenne bekannt, deren strahlende Öffnung mit einer Scheibe aus dielektrischem Material verschlossen wird, wobei nicht beschrieben wird, welcher Verschlussmechanismus verwendet wird.

DE 10 2005 056042 offenbart ein Antenne der Stand der Technik.

Aufgabe der Erfindung ist es eine Mikrowellenantenne für ein Füllstandmessgerät mit einem Antennenhohlraum anzugeben, dessen strahlende Öffnung einfach und kostengünstig mittels einer Scheibe mediendicht verschließbar ist.

Diese Aufgabe wird gelöst durch eine Mikrowellenantenne für ein Füllstandmessgerät mit den Merkmalen des Patentanspruch 1.

Bei einer solchen Mikrowellenantenne für ein Füllstandmessgerät mit einem Antennenhohlraum wird die die strahlende Öffnung verschließende Hf-durchlässige Scheibe erfindungsgemäß mittels eines Sprengringes in dem Antennenhohlraum lagefixiert und mit wenigstens einem Dichtmittel der Übergangs zwischen der Scheibe und der Mikrowellenantenne abgedichtet.

Mit dieser erfindungsgemäßen Lösung wird eine einfache und kostengünstige Halterung der Scheibe in dem Antennenhohlraum und gleichzeitig eine sichere Abdichtung gegenüber der Umgebung erreicht, wobei das Dichtmittel entweder auf der zum Antennenhohlraum zugewandten oder auf der abgewandten Seite des Sprengringes angeordnet werden kann. Vorzugsweise kann die Dichtheit dadurch erhöht werden, dass auf beiden Seiten des Sprengringes jeweils ein Dichtmittel angeordnet wird.

Idealerweise ist die Scheibe derart ausgebildet, dass sich deren zylinderförmige Umfangsfläche in Richtung des Antennenhohlraumes konisch verjüngt und eine Anlagefläche auf einer den Antennenhohlraum bildenden Oberfläche die zylinderförmige Umfangsfläche der Scheibe im Wesentlichen formschlüssig umschließt. Mit dieser konusartige Ausgestaltung der Scheibe, die damit bspw. in vorteilhafter Weise an den konusförmigen Verlauf einer Hornantenne angepasst werden kann, ist eine wesentlich einfachere Montage der Scheibe in den Antennenhohlraum möglich, insbesondere ist bei der Montage der Scheibe in den Antennenhohlraum eine Vorzentrierung der Scheibe verbunden.

In einer Weiterbildung der Erfindung wird zur axialen Fixierung der Position der Scheibe auf der Umfangsfläche der Scheibe eine umlaufende, den Sprengring teilweise einbettende Nut vorgesehen, wobei der auf der Umfangsfläche der Scheibe überstehende Teil des Sprengringes sich in eine auf der Anlagefläche umlaufende Nut erstreckt und diese umlaufende Nut auf der Anlagefläche mit einer Nuttiefe in radialer Richtung derart ausgebildet ist, dass der Sprengring beim Einsetzen der Scheibe in den Antennenhohlraum sich im Wesentlichen vollständig in diese Nut ausdehnen bzw. aufspreizen kann. In Verbindung mit der konusförmigen Scheibe kann die Montage des Sprengringes vereinfacht werden, indem der Sprengring zunächst in die umlaufende Nut auf der Anlagefläche eingelegt wird und anschließend beim Einführen der Scheibe durch den konusförmigen Verlauf der Umfangsfläche in die in der Anlagefläche verlaufenden Nut aufgespreizt wird, bevor er anschließend in die Nut auf der Umfangsfläche einrückt.

Besonders vorteilhaft ist es dabei, die Umfangsfläche der Scheibe stufenförmig zu verjüngen und den Sprengring auf einer Stufe dieser stufenförmigen Verjüngung anzuordnen. Damit lassen sich fertigungstechnisch die für den Sprengring vorgesehenen Nuten einfacher herstellen, sowohl auf der Umfangsfläche der Scheibe als auch auf der Anlagefläche, die natürlich in Anpassung an die stufenförmige Umfangsfläche der Scheibe ebenfalls entsprechend stufenförmig verjüngt. Vorzugsweise lassen sich auch die Dichtmittel in entsprechenden Nuten auf solchen Stufen, die dort einfacher zu realisieren sind, anordnen.

In einer Weiterbildung der Erfindung wird zum Aufweiten des Sprengringes in die auf der Anlagefläche ausgebildete umlaufende Nut beim Einführen der Scheibe in den Antennenhohlraum der Übergang auf der Umfangsfläche der Scheibe zwischen der den Sprengring aufnehmenden Stufe und der sich in verjüngender Richtung der Umfangsfläche sich anschließenden Stufe konisch verjüngend ausgebildet. Mit dieser Ausgestaltung entsteht ein zylindrischer Ansatz, an den sich der konische Übergang anschließt, der in vorteilhafter Weise zur Vorzentrierung bei der Montage dient.

Die Dichtmittel können, wie bereits oben ausgeführt, auf den die Verjüngung der Umfangsfläche der Scheibe bildenden Stufen angeordnet werden, wobei in vorteilhafter Weise ein Dichtmittel auf einer zum Sprengring benachbarten Stufe angeordnet werden kann; vorzugsweise können natürlich auf beiden zum Sprengring benachbarten Stufen jeweils ein Dichtmittel angeordnet werden.

In einer Weiterbildung der Erfindung kann das in Verjüngungsrichtung angeordnete Dichtmittel im Wesentlichen von einer in der Anlagefläche vorgesehenen Nut aufgenommen werden, während in der entsprechenden Stufe der Umfangsfläche der Scheibe lediglich ein Radialeinstich mit geringer Tiefe vorgesehen ist. Diese Ausgestaltung führt dazu, dass bei der Montage der Scheibe in die Öffnung der Mikrowellenantenne zunächst dieses Dichtmittel in die Nut der Anlagefläche eingelegt wird und anschließend die Scheibe eingeführt wird, um durch den nur geringen Einstich auf der Umfangsfläche der Scheibe Beschädigungen der Dichtfläche zu vermeiden.

Eine ebenfalls erleichterte Montage des entgegen der Verjüngungsrichtung angeordneten Dichtmittels ermöglicht eine Weiterbildung der Erfindung, bei der zur Aufnahme dieses Dichtmittels jeweils an der Umfangsfläche der Scheibe und der Anlagefläche eine im Wesentlichen senkrecht zur axialen Richtung angeordnete, in axialer Richtung beabstandete, umlaufende Anschlagflächen für das Dichtmittel vorgesehen sind.

Zur Gewährleistung einer sicheren Montage der Scheibe in den Antennenhohlraum ist am Ende der sich in Verjüngungsrichtung verlaufenden Anlagefläche eine im wesentlichen senkrecht in axialer Richtung stehende, umlaufende Anschlagfläche vorgesehen, an die beim Einschieben der Scheibe zum Verschließen der strahlende Öffnung dieselbe anschlägt. Ein entsprechender Druck auf die Scheibe nach der Montage stellt sicher, dass die Scheibe an dieser Anschlagfläche anliegt, womit eine erfolgreiche, insbesondere vollständige Montage gewährleistet ist.

Vorzugsweise wird die Hf-durchlässige Scheibe aus einem dielektrischen Material, vorzugsweise PTFE (Teflon) hergestellt. Für den Sprengring wird bevorzugt ein metallischer Runddraht verwendet, der als kostengünstiges Standardbauteil zur Verfügung steht. Ferner werden als Dichtmittel bevorzugt O-Ringe eingesetzt, die ebenfalls als kostengünstige Standardbauelemente zur Verfügung stehen.

Die Erfindung wird nachfolgend anhand eines Ausführungsbeispiels unter Bezugnahme auf die beigefügten Figuren ausführlich beschrieben. Es zeigen:
- Figur 1: eine perspektivische Darstellung eines Füllstandmessgerätes mit einer erfindungsgemäßen Mikrowellenantenne,
- Figur 2: eine Schnittdarstellung entlang der Längsachse des Füllstandmessgerätes nach Figur 1 in einer Einbaulage an einem angedeuteten Montagestutzen eines Behälters, und
- Figur 3: eine vergrößerte Darstellung des in Figur 2 eingekreisten Teils I.

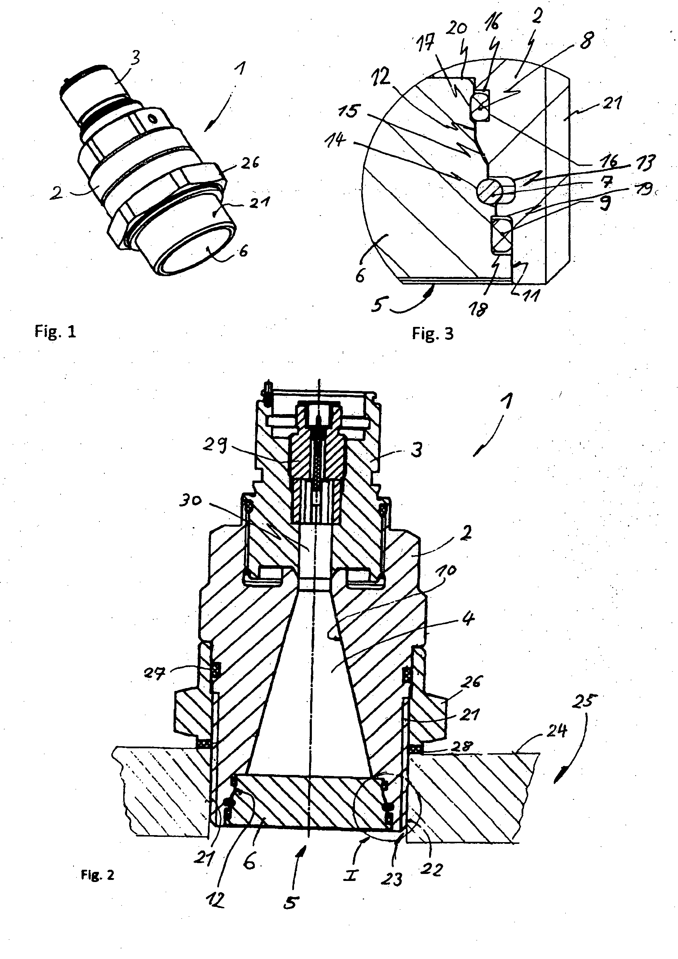

Das Füllstandmessgerät 1 mit einer erfindungsgemäßen Mikrowellenantenne 2 nach den Figuren 1 und 2 ist ein als Mikrowellenschranke aufgebauter Grenzstandsensor, der als Radarsensor arbeitet, indem kurze Mikrowellenimpulse in einen Füllgut aufnehmenden Behälter abgestrahlt werden und der die an dem Füllgut reflektierten Impulse wieder empfängt, um hieraus auf der Basis der Laufzeitmethode zu bestimmen, ob der Grenzstand erreicht ist.

Die Radarimpulse werden mittels einer in einem Gehäuse 3 des Füllstandmessgerätes 1 untergebrachten Elektronikeinheit 29 erzeugt und in einen Wellenleiter 30 eingekoppelt, der in einen als Hornantenne ausgebildeten Antennenhohlraum 4 der Mikrowellenantenne 2 mündet und von einer Hf-durchlässigen Scheibe 6 mittels eines Sprengringes 7 und mittels Dichtungen 8 und 9 mediendicht verschlossen wird, wie weiter unter anhand der Figur 3 ausführlicher erläutert wird. Das zylinderförmige Gehäuse 3 wird stirnseitig in ein auf einer Stirnseite der Mikrowellenantenne 2 vorgesehenen Sackbohrung mit Innengewinde eingeschraubt, wobei ein O-Ring die erforderliche Abdichtung gegenüber der Umgebung sicherstellt.

Um die Funktion als Füllstandsensor auszuführen, ist die Mikrowellenantenne 2 nach Figur 2 als Einschraubstutzen mit einem Außengewinde 21 derart ausgebildet, dass das Füllstandmessgerät 1 im Bereich einer ein Innengewinde 22 aufweisenden Öffnung 23 in einer Gehäusewand 24 eines in Figur 2 nur andeutungsweise dargestellten Behälters 25 unter Berücksichtigung einer bestimmten Einbaulage, hier bezüglich einer Polarisationsebene, eingeschraubt und zusätzlich mit einer Kontermutter gegen die Behälterwand 24 verspannt werden kann. Der Bereich um die Öffnung 23 des Behälters 25 kann auch als Rohrstutzen mit Montageflansch ausgebildet sein.

Die Abdichtung des Füllstandmessgerätes 1 gegenüber der Umgebung wird durch zwei Dichtungen 27 und 28 erreicht. Die als O-Ring ausgebildete Dichtung 27 wird von der Kontermutter 26, auch im verspannten Zustand überdeckt und dichtet den Übergang zwischen der Mikrowellenantenne 2 und der Kontermutter 26 ab. Die weitere Dichtung, eine Flachdichtung 28 liegt an einer ebenen, der Behälterwand 24 benachbarten Stirnseite der Kontermutter 26 an, die dazu dient den Übergang zur Behälterwand 24 abzudichten.

Die sichere Abdichtung im Übergang zur Behälterwand 24, bzw. eines entsprechenden Rohrstutzens wird durch eine richtige Montage dadurch erreicht, dass das Füllstandmessgerät 1 mit der Mikrowellenantenne 2 mit bis an einen Anschlag eingeschraubter Kontermutter 26 mittels des Gewindes 21 in die Öffnung 23 der Behälterwand 24 eingeschraubt wird, ohne jedoch festzudrehen. In diesem Zustand lässt sich durch Drehen des Füllstandmessgerätes 1 dasselbe in die erforderliche Einbaulage ausrichten und anschließend in dieser Position mittels der Kontermutter 26 gegen die Behälterwand 24 verspannen. Damit wird die Flachdichtung 28 derart zwischen der Stirnseite der Kontermutter 26 und der Behälterwand 24 eingeklemmt, dass eine sichere Abdichtung dieses Übergangs erreicht wird. Gleichzeitig bleibt auch die mit dem O-Ring 27 erzielte Abdichtung erhalten, da auch nach dem Verspannen mittels der Kontermutter 26 der Bereich des O-Ringes 27 überdeckt bleibt.

Figur 3 zeigt die vergrößerte Darstellung des in Figur 2 eingekreisten Teils I des Übergangs zwischen der die Öffnung 5 des Antennenhohlraumes 4 verschließenden Scheibe 6 und der Oberfläche 10 des Antennenhohlraumes 4, wobei diese Oberfläche 10 der inneren Oberfläche der Mikrowellenantenne 2 entspricht.

Die Hf-durchlässige Scheibe 6, die in der Regel aus PTFE besteht, ist mit einer in Richtung des Antennenhohlraumes 4 konisch stufenförmig sich verjüngenden Umfangsfläche 11 ausgebildet, die von einer von der Oberfläche 10 des Antennenholraumes 4 gebildeten Anlagefläche 12 im Wesentlichen vollständig formschlüssig umschlossen wird.

Außenseitig weist die Scheibe 6 ihren größten Durchmesser auf, der dem Innendurchmesser am Rand der Öffnung 5 des Antennenhohlraumes 4 entspricht. Eine erste Stufe auf der Umfangsfläche 11 der Scheibe 6 wird mit einer senkrecht zur Längsachse des Füllstandmessgerätes 1 stehenden, umlaufenden Anschlagfläche 18 gebildet, an der eine erste, als O-Ring ausgeführte Dichtung 9 anliegt, während eine zweite auf der gegenüberliegenden Seite des O-Ringes 9 liegende, ebenfalls senkrecht zur Längsachse stehende Anschlagfläche 19 von der Anlagefläche 12 gebildet wird. Auf der genannten ersten, den O-Ring 9 aufnehmenden Stufe der Umfangsfläche 11 der Scheibe 6 ist ein Einstich mit geringer Tiefe vorgesehen, der den O-Ring 9 geringfügig einbettet.

Die den Übergang zur anschließenden Stufe bildende umlaufende Fläche ist leicht gegenüber der senkrecht zur Längsachse des Füllstandmessgerätes 1 stehenden Ebene in Verjüngungsrichtung geneigt und geht in eine halbkreisförmig im Querschnitt ausgebildete Nut 14 zur teilweisen Einbettung des Sprengringes 7 über. Auf der Anlagefläche 12 ragt der überstehende Teil des Sprengringes 7 in eine Nut 13 mit rechteckigem Querschnitt, wobei die Nuttiefe dieser Nut 13 so gewählt ist, dass der Sprengring 7 bei der Montage der Scheibe sich in diese Nut 13 vollständig aufspreizen kann.

Der Übergang zur letzten Stufe auf der Umfangsfläche 11 der Scheibe 6 wird durch einen sich konisch verjüngenden Abschnitt 15 gebildet, der dazu dient, beim Einführen der Scheibe 6 in den Antennenhohlraum 4 mit der durch diesen Konus gebildeten Kegelstumpffläche den in der Nut 13 liegenden Sprengring 7 aufzuspreizen, bevor er in die halbkreisförmige Nut 14 auf der Umfangsfläche 11 einklinkt, um damit die Scheibe 6 im Antennenhohlraum 4 zu fixieren und zu halten.

Der Abschnitt der Scheibe 6 mit der letzten Stufe zur Aufnahme und Fixierung der zweiten, ebenfalls als O-Ring ausgebildeten Dichtung 8 stellt einen im wesentlichen zylindrischen Ansatz dar, da diese Stufe lediglich einen umlaufenden Einstich 17 mit geringer Tiefe zur Fixierung dieser Dichtung 8 aufweist. Damit dient dieser zylindrische Ansatz zur Vorzentrierung bei der Montage der Scheibe 6 in den Antennenhohlraum 4. Außerdem werden durch diesen leichten Einstich 17 im Bereich des O-Ringes 7 Beschädigungen der Dichtfläche bei der Montage der Scheibe 6 vermieden.

Vor der Montage der Scheibe 6 erfolgt eine Vormontage des Sprengringes 7 in die Nut 13 und der zweiten Dichtung 8 in die Nut 16 auf der Anlagefläche 12 sowie der ersten Dichtung 9 auf die Scheibe 6. Mittels des stirnseitigen, zylindrischen Ansatzes am verjüngten stirnseitigen Ende der Scheibe 6 erfolgt beim Einführen der Scheibe 6 in die Öffnung 5 des Antennenhohlraumes 4 eine Vorzentrierung mit anschließender Aufspreizung des Sprengringes 7 mittels des konusförmigen Abschnittes 15 und bei weiterem Einschieben der Scheibe 6 das Einklinken des Sprengringes 7 in die auf der Umfangsfläche 11 der Scheibe 6 angeordnete Nut 14. Ein weiteres Eindrücken der Scheibe 6 wird verhindert, da die stirnseitige Fläche der Scheibe 6 an einen auf der Anlagefläche 12, am Ende der konischen Verjüngung ausgebildeten Anschlagfläche 20 anschlägt.

Wie bereits erwähnt, besteht die Scheibe 6 aus dielektrischem Material, vorzugsweise PTFE (Teflon), ferner kann auch PP oder PVDF verwendet werden.

Die Mikrowellenantenne besteht aus Metall oder aus metallisiertem Kunststoff, bspw. Polybutylenterephthalat (PBT) mit Vakuumbeschichtung aus Kupfer oder Edelmetall.

Das die Elektronikeinheit aufnehmende Gehäuse 3 kann entweder aus Kunststoff, aus Metall, vorzugsweise Edelstahl oder aus pulverbeschichtetem Alu-Druckguss hergestellt sein.

Die erfindungsgemäße Mikrowellenantenne kann nicht nur für auf Radar basierende Grenzstandsensoren eingesetzt werden, sondern ist generell für alle Arten von Füllstandmessgeräte verwendbar, die mikrowellenbasiert funktionieren.

Bezugszeichenliste:
- 1: Füllstandmessgerät
- 2: Mikrowellenantenne
- 3: Gehäuse
- 4: Antennenhohlraum
- 5: Öffnung des Antennenhohlraumes 4
- 6: Scheibe
- 7: Sprengring
- 8: O-Ring
- 9: O-Ring

- 10: Oberfläche des Antennenhohlraumes 4
- 11: Umfangsfläche der Scheibe 6
- 12: Anlagefläche
- 13: Nut auf der Anlagefläche 12
- 14: Nut auf der Umfangsfläche 11
- 15: Konus auf der Umfangsfläche 11
- 16: Nut auf der Anlagefläche 12
- 17: Einstich auf der Umfangsfläche 11
- 18: Anschlagfläche auf der Umfangsfläche 11
- 19: Anschlagfläche auf der Anlagefläche 12

- 20: Anschlagfläche auf der Anlagefläche 12
- 21: Außengewinde an der Mikrowellenantenne 2
- 22: Innengewinde einer Montageöffnung eines Behälters
- 23: Öffnung eines Behälters
- 24: Behälterwand
- 25: Behälter
- 26: Kontermutter
- 27: O-Ring
- 28: Flachdichtung
- 29: Elektronikeinheit
- 30: Wellenleiter

## Patentansprüche

1. Mikrowellenantenne (2) für ein Füllstandmessgerät (1), mit einem eine strahlende Öffnung (5) aufweisenden Antennenhohlraum (4), wobei die strahlende Öffnung (5) mit einer Hf-durchlässigen Scheibe (6) verschließbar ist, wobei
- wenigstens ein Dichtmittel (8,9) zum Abdichten des übergangs zwischen der Scheibe (6) und der Mikrowellenantenne (2) vorgesehen ist, wobei
- eine Anlagefläche (12) auf einer den Antennenhohlraum (4) bildenden Oberfläche (10) die zylinderförmige Umfangsfläche (11) der Scheibe (6) im Wesentlichen formschlüssig umschließt und
- eine stufenförmige Verjüngung der Umfangsfläche (11) der Scheibe (6) vorgesehen ist,
**dadurch gekennzeichnet, dass**
- die Scheibe (6) derart ausgebildet ist, dass sich deren zylinderförmige Umfangsfläche (11) in Richtung des Antennenhchlraumes (4) konisch verjüngt, und
- die Scheibe (6) mittels eines Sprengringes (7) im Antennenhohlraum (4) lagefixiert ist, und
- der Sprengring (7) auf einer Stufe der stufenförmigen Verjüngung der Umfangsfläche (11) der Scheibe (6) angeordnet ist, wobei zum Aufweiter. bzw. Aufspreizen des Sprengringes (7) in die auf der Anlagefläche (12) ausgebildeten umlaufenden Nut (13) beim Einführen der scheibe (6) in den Antennenhohlraum (4) ein Übergang (15) auf der Umfangsfläche (11) zwischen der den Sprengring (7) aufnehmenden Stufe und der sich in verjüngender Richtung der Umfangsfläche (11) sich anschließenden Stufe konisch verjüngend ausgebildet ist.

2. Mikrowellenantenne (2) nach Anspruch 1,
**dadurch gekennzeichnet, dass**
das Dichtmittel (8, 9) auf der dem Antennenhohlraum (4) benachbarten oder abgewandten Seite des Sprengringes (7) angeordnet ist.

3. Mikrowellenantenne (2) nach Anspruch 1,
**dadurch gekennzeichnet, dass**
auf beiden Seiten des Sprengringes (7) jeweils ein Dichtmittel (8,9) angeordnet ist.

4. Mikrowellenantenne (2) nach einem der vorangehenden Ansprüche,
**dadurch gekennzeichnet, dass**
- zur axialen Fixierung der Position der Scheibe (6) auf der Umfangsfläche (11) der Scheibe (6) eine umlaufende, den Sprengring (7) teilweise einbettende Nut (14) vorgesehen ist und der auf der Umfangsfläche (11) der Scheibe (6) überstehende Teil des Sprengringes (7) sich in eine auf der Anlagefläche (12) umlaufende Nut (13) erstreckt, und
- diese umlaufende Nut (13) auf der Anlagefläche (10) mit einer Nuttiefe in radialer Richtung derart ausgebildet ist, dass der Sprengring (7) beim Einsetzen der Scheibe (6) in die strahlende Öffnung (5) sich im Wesentlichen vollstandig in diese Nut (13) aufspreizen kann.

5. Mikrowellenantenne (2) nach einem der Ansprüche vorhergehenden, **dadurch gekennzeichnet**, dasein Dichtmittel (8, 9) auf einer zum Sprengring (7) benachbarten, die konische Verjüngung bildenden Stufe angeordnet ist.

6. Mikrowellenantenne (2) nach einem der vorübergehenden Ansprüche
**dadurch gekennzeichnet, dass**
auf beiden zum Sprengring benachbarten, die konische Verjüngung bildenden stufen jeweils ein Dichtmittel (8, 9) angeordnet ist.

7. Mikrowellenantenne (2) nach Anspruch 5 oder 6,
**dadurch gekennzeichnet, dass**
das in Verjüngungsrichtung angeordnete Dichtmittel (8) im Wesentlichen von einer in der Anlagefläche (12) vorgesehenen Nut (16) aufgenommen wird und in der entsprechenden Stufe der Umfangsfläche (11) der Scheibe (6) lediglich ein Radialeinstich (17) mit geringer Tiefe vorgesehen ist.

8. Mikrowellenantenne (2) nach einem der Ansprüche 5 bis 7,
**dadurch gekennzeichnet, dass**
zur Aufnahme des entgegen der Verjüngungsrichtung angeordneten Dichtmittels (9) jeweils an der Umfangsfläche (11) der Scheibe (6) und der Anlagefläche (12) im Wesentlichen senkrecht zur axialen Richtung angeordnete, in axialer Richtung beabstandete, umlaufende Anschlagflächen (18, 19) für das Dichtmittel (9) vorgesehen sind.

9. Mikrowellenantenne (2) nach einem der vorangehenden Ansprüche,
**dadurch gekennzeichnet, dass**
am Ende der in Richtung des Antennenhohlraumes verlaufende Anlagefläche (10) eine im wesentlichen senkrecht in axialer Richtung stehende umlaufende Anschlagfläche (20) vorgesehen ist, an die beim Einschieben der Scheibe (6) zum verschließen der strahlende Öffnung (5) dieselbe anschlägt.

10. Mikrowellenantenne (2) nach einem der vorangehenden Ansprüche,
**dadurch gekennzeichnet, dass**
die Hf-durchlässige Scheibe (6) aus dielektrischem Material, vorzugsweise aus PTFE (Teflon) hergestellt ist.

11. Mikrowellenantenne (2) nach einem der vorangehenden AnSprüche,
**dadurch gekennzeichnet, dass**
ein metallischer Runddraht-Sprengring (7) vorgesehen ist.

12. Mikrowellenantenne (2) nach einem der vorangehenden Ansprüche,
**dadurch gekennzeichnet, dass**
als Dichtmittel O-Ringe (8, 9) vorgesehen sind.

## Claims

1. A microwave aerial (2) for a filling level gauge (1), with a cavity (4) having a radiating opening (5), wherein the radiating opening (5) is capable of being closed by an HF-permeable disc (6), wherein
- at least one sealing medium (8, 9) is provided for sealing off the transition between the disc (6) and the microwave aerial (2), wherein
- an abutment face (12) on a surface (10) forming the cavity (4) of the aerial surrounds the cylindrical peripheral face (11) of the disc (6) in a substantially positively locking manner and
- a step-shaped taper of the peripheral face (11) of the disc (6) is provided,
**characterized in that**
- the disc (6) is designed in such a way that the cylindrical peripheral face (11) thereof tapers in a conical manner in the direction of the cavity (4) of the aerial, and
- the disc (6) is fixed in position in the cavity (4) of the aerial by means of a retaining ring (7), and
- the retaining ring (7) is arranged on a step of the step-shaped taper of the peripheral face (11) of the disc (6), wherein in order to widen or spread the retaining ring (7) into the continuous groove (13) formed on the abutment face (12) during the insertion of the disc (6) into the cavity (4) of the aerial a transition (15) is formed in a conically tapering manner on the peripheral face (11) between the step receiving the retaining ring (7) and the step adjoining in the direction of the taper of the peripheral face (11).

2. A microwave aerial (2) according to Claim 1, **characterized in that** the sealing medium (8, 9) is arranged on the side of the retaining ring (7) adjacent to or facing away from the cavity (4) of the aerial.

3. A microwave aerial (2) according to Claim 1, **characterized in that** a sealing medium (8, 9) is arranged in each case on the two sides of the retaining ring (7).

4. A microwave aerial (2) according to any one of the preceding Claims, **characterized in that**
- a continuous groove (14) embedding the retaining ring (7) in part is provided for the axial fixing of the position of the disc (6) on the peripheral face (11) of the disc (6), and the part of the retaining ring (7) projecting on the peripheral face (11) of the disc (6) extends into a continuous groove (13) on the abutment face (12), and
- this continuous groove (13) on the abutment face (10) *[sic]* is formed with a depth in the radial direction in such a way that when the disc (6) is inserted into the radiating opening (5) the retaining ring (7) can spread substantially completely into this groove (13).

5. A microwave aerial (2) according to any one of the Claims preceding, **characterized in that** a sealing medium (8, 9) is arranged on a step adjacent to the retaining ring (7) and forming the conical taper.

6. A microwave aerial (2) according to any one of the preceding Claims, **characterized in that** a sealing medium (8, 9) is arranged in each case on the two steps adjacent to the retaining ring and forming the conical taper.

7. A microwave aerial (2) according to Claim 5 or 6, **characterized in that** the sealing medium (8) arranged in the direction of the taper is received substantially by a groove (16) provided in the abutment face (12), and only one radial recess (17) of low depth is provided in the corresponding step of the peripheral face (11) of the disc (6).

8. A microwave aerial (2) according to any one of Claims 5 to 7, **characterized in that** continuous stop faces (18, 19) arranged substantially at a right angle to the axial direction and at a distance in the axial direction are provided for the sealing medium (9) in each case on the peripheral face (11) of the disc (6) and the abutment face (12) in order to receive the sealing medium (9) arranged in a direction opposed to the direction of the taper.

9. A microwave aerial (2) according to any one of the preceding Claims, **characterized in that** a continuous stop face (20), which is situated substantially at a right angle in the axial direction and against which during insertion of the disc (6) for closing the radiating opening (5) the latter abuts, is provided at the end of the abutment face (10) [*sic*] extending in the direction of the cavity of the aerial.

10. A microwave aerial (2) according to any one of the preceding Claims, **characterized in that** the HF-permeable disc (6) is produced from dielectric material, preferably from PTFE (Teflon).

11. A microwave aerial (2) according to any one of the preceding Claims, **characterized in that** a metallic round-wire retaining ring (7) is provided.

12. A microwave aerial (2) according to any one of the preceding Claims, **characterized in that** O-rings (8, 9) are provided as the sealing medium.

## Revendications

1. Antenne à micro-ondes (2) destinée à un appareil de mesure de niveau (1) comprenant une cavité d'antenne (4) comprenant une ouverture rayonnante (5), cette ouverture rayonnante (5) pouvant être fermée par un disque (6) perméable aux Hf, au moins une garniture d'étanchéité (8, 9) étant prévue pour réaliser l'étanchéité de la zone de transition entre le disque (6) et l'antenne à micro-ondes (2),
une surface d'appui (12) située sur une surface (10) formant la cavité d'antenne (4) entourant essentiellement par une liaison par la forme la surface périphérique (11) du disque (6), et
une diminution en gradins de la surface périphérique (11) du disque (6) étant prévue,
**caractérisé en ce que**
le disque (6) est réalisé de sorte que sa surface périphérique cylindrique (11) diminue coniquement en direction de la cavité d'antenne (4),
le disque (6) est fixé en position dans la cavité d'antenne (4) au moyen d'un jonc d'arrêt (7), et
le jonc d'arrêt (7) est monté sur un gradin de la diminution en gradins de la surface périphérique (11) du disque (6), antenne dans laquelle pour permettre d'étirer ou de déployer le jonc d'arrêt (7) dans une rainure périphérique (13) formée sur la surface d'appui (12), lors de l'introduction du disque (6) dans la cavité d'antenne (4) une transition (15) située sur la surface périphérique (11) entre le gradin recevant le jonc d'arrêt (7) le gradin suivant dans la direction de diminution de cette surface périphérique (11) est réalisée de façon à diminuer coniquement.

2. Antenne à micro-ondes (2) conforme à la revendication 1,
**caractérisée en ce que**
la garniture d'étanchéité (8, 9) est montée sur le côté du jonc d'arrêt (7) voisin de/ou opposé à la cavité d'antenne (4).

3. Antenne à micro-ondes (2) conforme à la revendication 1,
**caractérisée en ce qu'**
une garniture d'étanchéité (8, 9) est respectivement montée des deux côtés du jonc d'arrêt (7).

4. Antenne à micro-ondes (2) conforme à l'une des revendications précédentes,
**caractérisée en ce que**
pour permettre la fixation axiale de la position du disque (6) il est prévu sur la surface périphérique (11) de ce disque (6), une rainure (14) encastrant partiellement le jonc d'arrêt, et la partie de ce jonc d'arrêt (7) dépassant de la surface périphérique (11) du disque (6) s'étend dans une rainure périphérique (13) située sur la surface d'appui (12), et cette rainure périphérique (13) située sur la surface d'appui (12) est réalisée avec une profondeur en direction radiale telle que le jonc d'arrêt (7) puisse se déployer essentiellement totalement dans cette rainure (13) lors de l'introduction du disque (6) dans l'ouverture rayonnante (5).

5. Antenne à micro-ondes (2) conforme à l'une des revendications précédentes,
**caractérisée en ce qu'**
une garniture d'étanchéité (8, 9) est montée sur un gradin voisin du jonc d'arrêt (7) formant la diminution conique.

6. Antenne à micro-ondes (2) conforme à l'une des revendications précédentes,
**caractérisée en ce qu'**
une garniture d'étanchéité (8, 9) est respectivement montée sur deux gradins voisins du jonc d'arrêt formant la diminution conique.

7. Antenne à micro-ondes (2) conforme à la revendication 5 ou 6,
**caractérisée en ce que**
la garniture d'étanchéité (8) située dans la direction de diminution est essentiellement logée dans une rainure (16) située sur la surface d'appui (12), et, dans le gradin correspondant de la surface périphérique (11) du disque (6), est uniquement prévue une entaille radiale (17) de faible profondeur.

8. Antenne à micro-ondes (2) conforme à l'une des revendications 5 à 7,
**caractérisée en ce que**
pour permettre la réception de la garniture d'étanchéité (9) située à l'opposé de la direction de diminution, sont respectivement prévues sur la surface périphérique (11) du disque (6) et sur la surface d'appui (12) des surfaces d'arrêt périphériques (18, 19) pour la garniture d'étanchéité (9) positionnées essentiellement perpendiculairement à la direction axiale et écartées l'une de l'autre en direction axiale.

9. Antenne à micro-ondes (2) conforme à l'une des revendications précédentes,
**caractérisée en ce qu'**
à l'extrémité de la surface d'appui (10) s'étendant en direction de la cavité d'antenne, il est prévu une surface d'arrêt périphérique (20) s'étendant essentiellement perpendiculairement à la direction axiale, sur laquelle le disque (6) vient en butée lors de son introduction par glissement pour fermer l'ouverture de rayonnante (5).

10. Antenne à micro-ondes (2) conforme à l'une des revendications précédentes,
**caractérisée en ce que**
le disque (6) perméable aux Hf est réalisé en un matériau diélectrique, de préférence en PTFE (téflon).

11. Antenne à micro-ondes (2) conforme à l'une des revendications précédentes,
**caractérisée en ce qu'**
il est prévu un jonc d'arrêt (7) en fil métallique de section circulaire.

12. Antenne à micro-ondes (2) conforme à l'une des revendications précédentes,
**caractérisée en ce qu'**
en tant que garniture d'étanchéité il est prévu des anneaux toriques (8, 9).
